# EUROPEAN PATENT APPLICATION

(11) **EP 4 298 884 A1**
(43) Date of publication of application: **03.01.2024**
(21) Application number: 23162516.1
(22) Date of filing: 17.03.2023
(51) Int. Cl.: A01D 34/00, A01D 34/81, A01D 34/82, B60W 30/09

(54) **ROBOTIC GARDEN TOOL AND METHOD**

(30) Priority: 18.03.2022 US 202263321477 P; 18.03.2022 US 202263321487 P
(71) Applicant: Techtronic Cordless GP, Anderson, SC 29621 (US)
(72) Inventor: LEE, Hei Man, Kwai Chung (HK); CHOI, Man Ho, Kwai Chung (HK); LAI, Hok Sum Sam, Kwai Chung (HK); NG, Ho Lam, Kwai Chung (HK)
(74) Representative: Zimmermann & Partner Patentanwälte mbB

(57) **Abstract**

A method of turning a robotic garden tool in the presence of an object, where the robotic garden tool includes a body with a first end and a second end opposite the first end. The method includes moving the robotic garden tool in a first direction of travel with the first end serving as the leading end, stopping the robotic garden tool at a first location spaced a predetermined distance from the object, rotating the robotic garden tool when in the first location, and moving the robotic garden tool away from the first location in a second direction of travel with the second end serving as the leading end.

## Description

### CROSS-REFERENCE TO RELATED APPLICATION

This application claims priority to co-pending U.S. Provisional Patent Application No. 63/321,477, filed March 18, 2022, the entire contents of which are incorporated herein by reference.

### FIELD OF THE INVENTION

The embodiments described herein related to a robotic garden tool, and more specifically to a more efficient method of operating the robotic garden tool.

### BACKGROUND OF THE INVENTION

When a robotic garden tool encounters a barrier of some kind it is required to change its direction to remain on the desired cutting area.

### SUMMARY

In some aspects, a robotic garden tool including a tool body having a first end and a second end opposite the first end, where the tool body defines a longitudinal axis extending through the first end and the second end, one or more wheel assemblies coupled to the tool body, and a controller in operable communication with the wheel assemblies. The controller being configured to output one or more signals to the wheel assemblies to move the tool body in a first direction of travel, stop movement of the tool body in a first location spaced a predetermined distance from an object, rotate the tool body while in the first location, and move the tool body away from the first location in a second direction of travel opposite the first direction of travel after the tool body has rotated.

Alternatively or additionally, in any combination, where the control system is configured to output one or more signals to cause the tool body to rotate less than 90 degrees in the first location.

Alternatively or additionally, in any combination, where the control system is configured to output one or more signals to cause the tool body to rotate less than 30 degrees in the first location.

Alternatively or additionally, in any combination, where the control system configured to output one or more signals to cause the tool body to rotate less than 10 degrees in the first location.

Alternatively or additionally, in any combination, where the tool body includes a periphery, and wherein the tool body is configured to rotate about a tool pivot axis that is positioned within the periphery.

Alternatively or additionally, in any combination, where the tool body travels with the first end as the leading end when traveling in the first direction, and wherein the tool body travels with the second end as the leading end when traveling in the second direction.

Alternatively or additionally, in any combination, where the control system is configured to send one or more signals to cause the tool body to pivot a randomly selected number of degrees when in the first location.

Alternatively or additionally, in any combination, where the randomly selected number of degrees is less than 30 degrees.

Alternatively or additionally, in any combination, further including a cutting assembly, and where the cutting assembly includes a blade guard defining a guard axis, and a cutting blade that is rotatable with respect to the blade guard about the guard axis.

Alternatively or additionally, in any combination, where the blade guard includes at least one axis of symmetry.

Alternatively or additionally, in any combination, where the axis of symmetry is perpendicular to the longitudinal axis of the tool body.

Alternatively or additionally, in any combination, where the cutting assembly is configured to cut vegetation while the tool body is traveling in both the first direction of travel and the second direction of travel.

In another aspect, a method of turning a robotic garden tool in the presence of an object, where the robotic garden tool includes a body with a first end and a second end opposite the first end, the method including moving the robotic garden tool in a first direction of travel with the first end serving as the leading end, stopping the robotic garden tool at a first location spaced a predetermined distance from the object, rotating the robotic garden tool when in the first location, and moving the robotic garden tool away from the first location in a second direction of travel with the second end serving as the leading end.

Alternatively or additionally, in any combination, where the robotic garden tool includes a periphery, and where rotating the robotic garden tool includes rotating the robotic garden tool about a pivot point located within the periphery.

Alternatively or additionally, in any combination, where rotating the robotic garden tool includes rotating the robotic garden tool less than 90 degrees.

Alternatively or additionally, in any combination, where rotating the robotic garden tool includes rotating the robotic garden tool less than 30 degrees.

Alternatively or additionally, in any combination, where rotating the robotic garden tool includes rotating the robotic garden tool less than 10 degrees.

Alternatively or additionally, in any combination, further including selecting a random rotation angle, and where rotating the robotic garden tool includes rotating the robotic garden tool by the random rotation angle.

Alternatively or additionally, in any combination, where selecting a random rotation angle includes selecting an angle that is less than or equal to 30 degrees.

Alternatively or additionally, in any combination, where the garden tool includes at least one wheel assembly, and where moving the robotic garden tool in the first direction includes rotating the first wheel assembly in a first rotational direction, and where moving the robotic garden tool in a second direction includes rotating the first wheel assembly in a second direction of rotation opposite the first direction of rotation.

### BRIEF DESCRIPTION OF THE DRAWINGS

FIG. 1 is a plan view of a robotic garden tool positioned within a cutting area encompassed by a barrier.
FIG. 2 is a side view of the garden tool of FIG. 1.
FIG. 3 is a top view of the garden tool of FIG. 1.

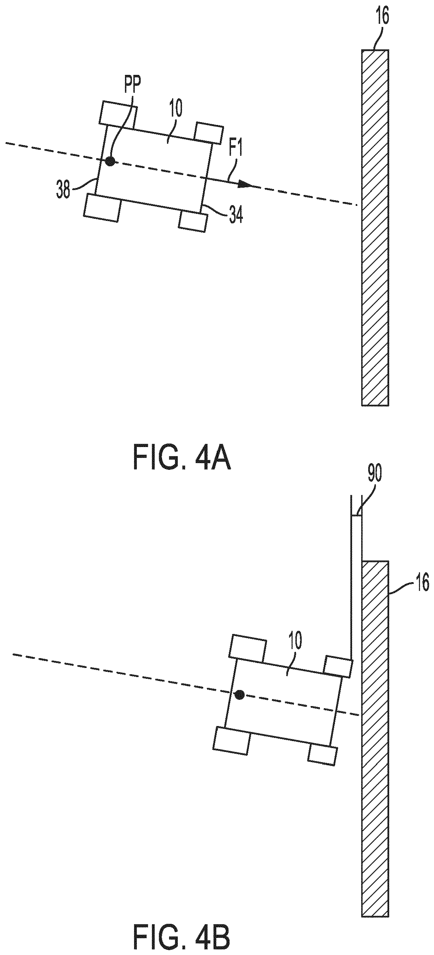

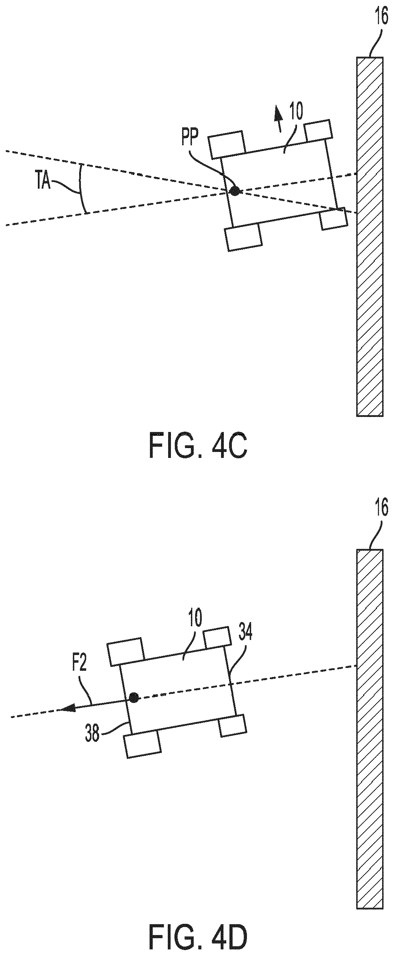

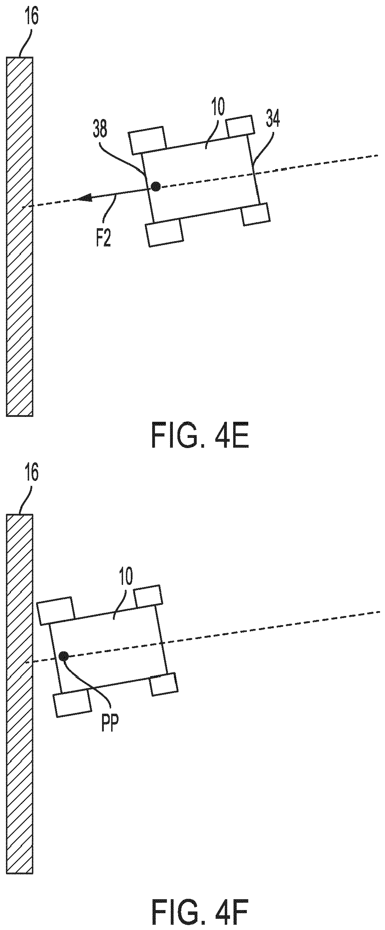

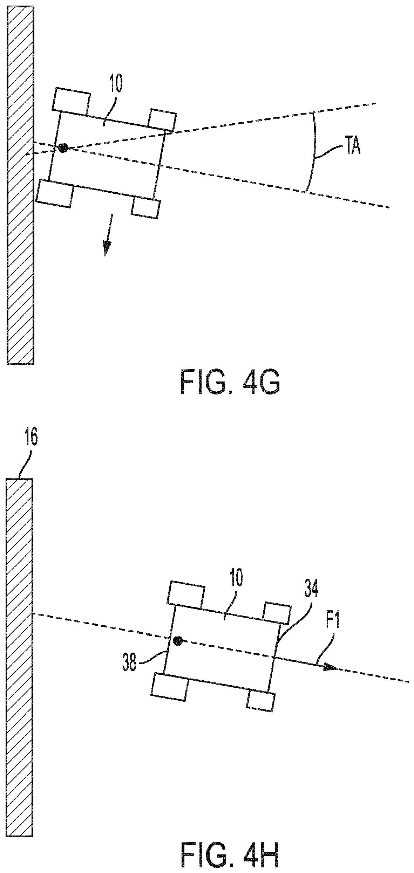

FIG. 4A-4H illustrate the stages of a low-impact style turn.

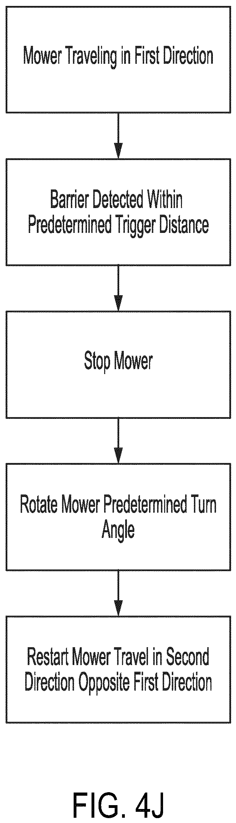

FIG. 4J is a flow chart illustrating the stages of the low-impact style turn of FIGS. 4A-4H.
FIG. 5 illustrates various mowing patterns incorporating a low-impact style turn.
FIG. 6 is a top view of another embodiment of a robot lawn mower.
FIGS. 7A-7D illustrate a high-impact style turn.
FIG. 8 is a side view of the garden tool of FIG. 1 with another embodiment of a cutting assembly thereon.
FIG. 9 is a top perspective view of another embodiment of a blade guard from the cutting assembly of FIG. 8.
FIG. 10 is a bottom perspective view of the blade guard of FIG. 9.
FIG. 11 is a front view of the blade guard of FIG. 9.
FIG. 12 is a side view of the blade guard of FIG. 9.
FIG. 13 is a bottom view of the blade guard of FIG. 9.
FIG. 14 is a section view taken from line 14-14 of FIG. 13.
FIG. 15 is the section view of FIG. 14 with a cutting blade installed thereon.
FIG. 16 is a bottom view of another embodiment of a garden tool.
FIG. 17 is a perspective view of the forward bumper of the garden tool of FIG. 16.
FIG. 18 is a perspective view of the rearward bumper of the garden tool of FIG. 16.
FIG. 19 is a bottom perspective view of another embodiment of a blade guard with a blade mounted thereto.
FIG. 20 is a bottom perspective view of another embodiment of a blade guard mounted to a garden tool.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting.

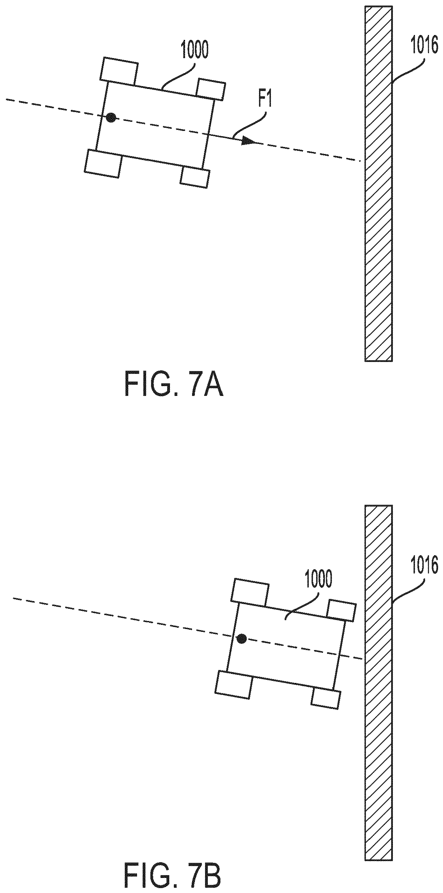

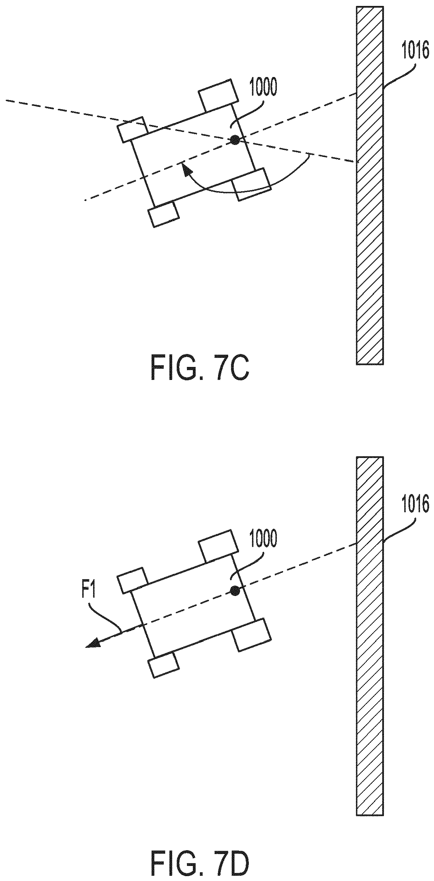

FIGS. 7A-7D illustrate a "high-impact" pivoting turn being conducted by a robotic lawn mower 1000. To conduct the turn, the mower 1000 approaches a barrier 1016 traveling in a forward or first direction of travel F1 (see FIG. 7A) at a predetermined speed. Once the mower 1000 is within a pre-determined distance of the barrier 1016, the mower 1000 stops and rotates greater than 90 degrees (see FIGS. 7B and 7C). With the mower 1000 completely rotated, the mower 1000 then resumes traveling in a forward direction of travel F1 (see FIG. 7D). This form of turning is considered "high-impact" for two primary reasons. First, the large rotational movement (e.g., greater than 90 degrees) requires a large amount of energy to execute and therefore is a large drain on the internal batteries of the mower 1000. Second, since most turns occur near the perimeter of the cutting area (e.g., proximate a barrier 1016), the underly turf is subject to increase wear and tear due to the sliding that occurs during such a large turns.

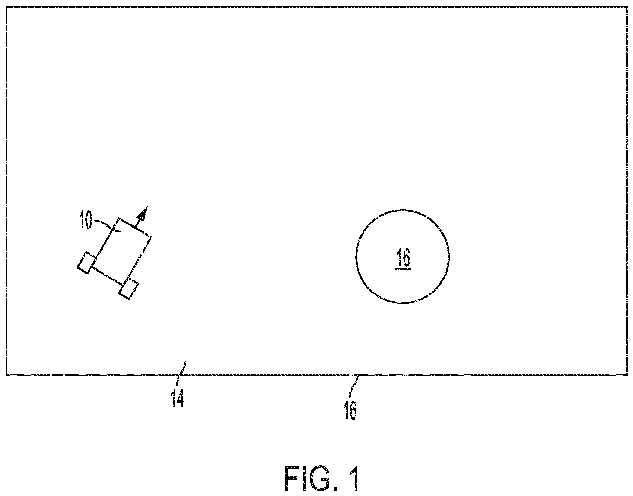

Figures 1-3 illustrate a robotic garden tool 10. More specifically, the garden tool 10 includes a robotic lawn mower for use to cut vegetation such as grass in an enclosed cutting area 14. The cutting area 14 generally includes, but is not limited to, a continuous area of grass or other vegetation that is enclosed by one or more barriers 16. In the illustrated embodiment, the barriers 16 include a series of electrified wires enclosing the cutting area 14 while in alternative embodiments different form of barrier may be used such as, but not limited to, walls, pavers, GPS data points, and the like. As shown in FIG. 1, such barriers 16 may be used to enclose the overall cutting area 14 and/or to segregate one or more interior regions from the cutting area 14. While the illustrated tool 10 is a robotic mower, it is understood that in alternative embodiments other forms of robotic tool may be used including, but not limited to, a robotic trimmer, a robotic sprinkler, a robotic fertilizer spreader, and the like.

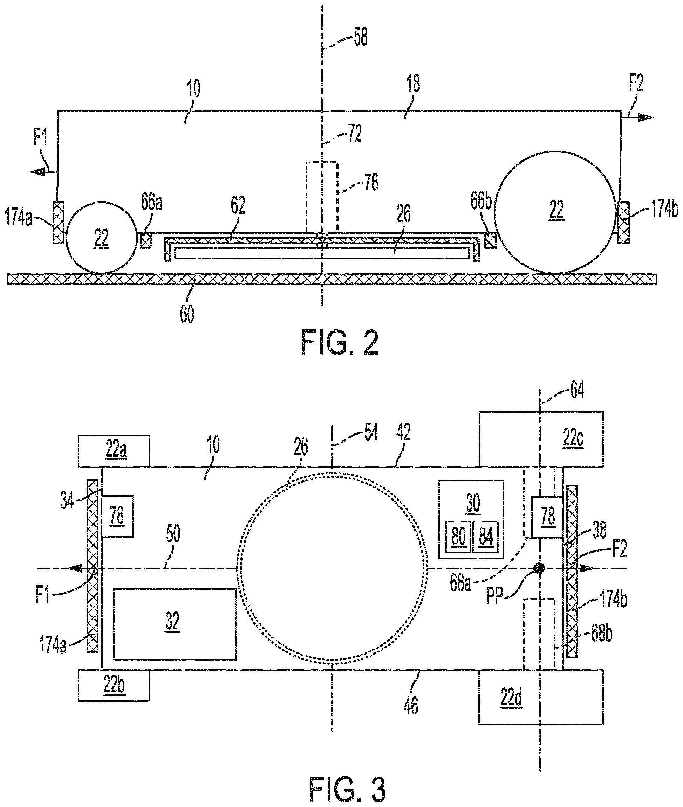

As shown in FIGS. 2 and 3, the tool 10 is an electrically powered, self-propelled device that includes a body 18, a plurality of wheels 22 rotatably mounted to the body 18, a cutting blade 26 rotatably mounted to the body 18, a controller 30, and a battery 32. The body 18, in turn, includes a front or first end 34, rear or second end 38 opposite the first end 34, a right or first side 42, and a left or second side 46 opposite the first side 42. The body 18 also defines a longitudinal axis 50 extending along the length of the body 18 and centered between the first side 42 and the second side 46 (e.g., passing through both the first and second ends 34, 38). The body 18 also defines a lateral axis 54 extending along the width of the body 18 and centered between the first and second ends 34, 38 (e.g., passing through both the first and second sides 42, 46). The body 18 also defines a central axis 58 generally positioned at the intersection of the longitudinal and lateral axes 50, 54 and oriented perpendicular to both (e.g., in a generally vertical orientation).

As shown in FIG. 3, the tool 10 includes four wheels 22a, 22b, 22c, 22d, each rotatably coupled to the body 18 and configured to support the tool 10 for self-driven movement along a support surface 60 (e.g., the surface of the cutting area 14). In the illustrated embodiment, the wheels 22a, 22b, 22c, 22d include two steerable, undriven wheels 22a, 22b and two non-steerable, driven wheels 22c, 22d. However, in alternative embodiments, all or any sub-set of the wheels 22 may be driven and all or any sub-set of the wheels 22 may be steerable. Furthermore, while the illustrated steerable wheels are passive in nature (e.g., a caster-style wheel), it is understood that in alternative embodiments the steerable wheels 22a, 22b may be actively driven by the controller 30. In still other embodiments, the tool 10 may include more or fewer wheels 22 positioned in different arrangements about the tool 10. In still other embodiments, the wheels 22 may be replaced by other forms of propulsion such as, but not limited to, tracks, omni-wheels, walking legs, and the like.

The driven wheels 22c, 22d of the tool 10 are positioned proximate the second end 38 of the body 18 and rotate about a common rear axis 64 oriented perpendicular to the longitudinal axis 50. In the illustrated embodiment, each rear wheel 22c, 22d is mounted to and driven by a dedicated electric motor 68a, 68b to provide propulsion for the tool 10 over the support surface 60. In some embodiments, the wheels 22 may be mounted directly to a respective motor 68a, 68b while in other embodiments a gear reduction and the like may be used.

During use, the controller 30 is configured to output signals to the wheel motors 68a, 68b controlling the rotation of each motor 68a, 68b independently from each other and, as a result, the rotation of the corresponding driven wheels 22c, 22d, respectively. The controller 30 is configured to output signals to each motor 68a, 68b dictating the direction and speed of rotation of each wheel 22a, 22b. For example, the controller 30 may instruct a motor 68a, 68b to produce forward rotation (e.g., rotating the respective wheel 22c, 22d toward the first end 34 of the body 18) or a rearward direction opposite the forward direction (e.g., rotating the respective wheel 22c, 22d toward the second end 38 of the body 18).

In the illustrated embodiment, the driven wheels 22c, 22d are non-steerable. However, in alternative embodiments, the driven wheels 22c, 22d may also be steerable.

As shown in FIGS. 2 and 3, the blade 26 of the tool 10 is mounted for rotation relative to the body 18 about a blade axis 72. More specifically, the blade 26 is mounted to a dedicated blade motor 76 which rotates the blade 26 during use. In the illustrated embodiment, the blade axis 72 is oriented vertically (e.g., parallel to the central axis 58) and positioned proximate the center of the body 18. In some embodiments, the blade axis 72 may be coincident with the central axis 58. During use, the blade 26 is mounted to the body 18 of the tool 10 such that it is able to cut vegetation while the tool 10 is traveling in either a first or forward direction F1 (e.g., toward the first end 34) or traveling in a second or rearward direction F2 opposite the forward direction F1 (e.g., toward the second end 38).

In some embodiments, the tool 10 may also include a blade guard 62 configured to at least partially encompass the blade 26. During use, the blade guard 62 is configured to restrict access to the blade 26 by unwanted debris and appendages while permitting the vegetation access to the blade 26 contained therein. In the illustrated embodiment, the blade guard 62 has at least one axis of symmetry establishing forward and backward symmetry (e.g., the axis of symmetry is parallel to the lateral axis 54). As such, the blade guard 62 is optimized for vegetation cutting operations in both the first and second direction of travel F1, F2.

In still other embodiments, the tool 10 may also include one or more grass combs 66 mounted to one of the body 18 or the blade guard 62 and configured to engage and orient the vegetation before the vegetation comes into contact with the blade 26. In the illustrated embodiment, the tool 10 includes a front comb 66a positioned between the blade 26 and the front end 34 and a rear comb 66b positioned between the blade 26 and the rear end 38. More specifically, the layout and orientation of the combs 66a, 66b are configured to produce at least one axis of symmetry establishing forward and rearward symmetry (e.g., the axis of symmetry is parallel to the lateral axis 54). As such, the combs 66a, 66b are optimized for vegetation cutting operations in both the first and second directions of travel F1, F2.

In still other embodiments, the tool 10 may also include one or more bumpers 174 mounted to the body 18 and configured to detect when an object comes into contact with the periphery of the tool 10. In the illustrated embodiment, the tool 10 includes a front bumper 174a proximate the first end 34 and a rear bumper 174b proximate the second end 38. More specifically, the layout and orientation of the bumpers 174a, 174b are configured to produce at least one axis of symmetry establishing forward and rearward symmetry. As such, the bumpers 174a, 174b are optimized for vegetation cutting operations in both the first and second directions of travel F1, F2.

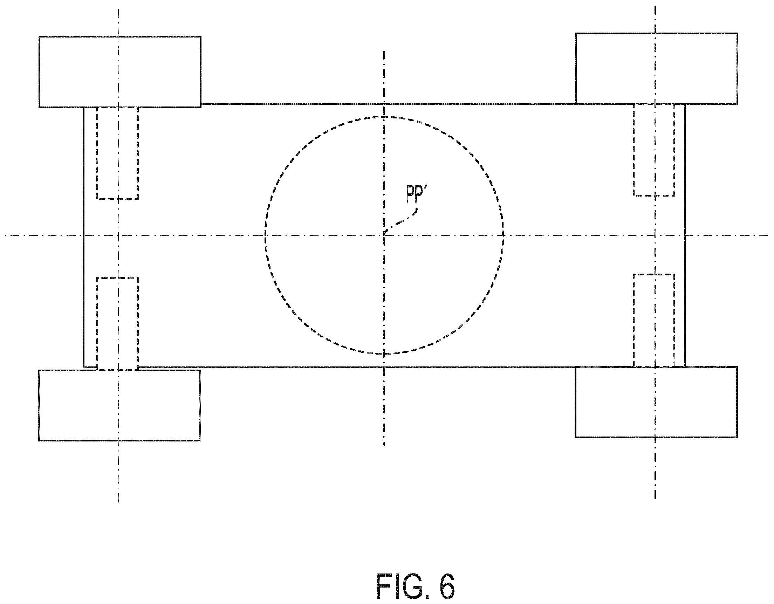

As discussed above, aspects or subcomponents of the tool 10 may produce one or more axes of symmetry to better accommodate vegetation cutting while traveling in both the first and second directions F1, F2. For example, the wheels 22 may be oriented on the tool 10 so that they have at least forward and rearward symmetry (see FIG. 6). Furthermore, any sensors (e.g., ultrasonic sensors, infrared sensors, image sensors) and/or barrier detectors 78 may be mounted to the body 18 to produce at least forward and rearward symmetry. In still other embodiments, the shape and contour of the body 18 itself may also include at least longitudinal symmetry to better accommodate vegetation cutting while traveling in both the first and second directions F1, F2. In still other embodiments, additional axes of symmetry may be present in the above-described sub-components to allow vegetation cutting in still more directions of travel (e.g., side-to-side travel, pivoting about a given axis of rotation, and the like).

The controller 30 of the tool 10 is mounted within the body 18 and includes a processor 80 and memory 84. As shown in FIG. 3, the controller 30 is at least in operable communication with the motors 68a, 68b of the driven wheels 22c, 22d, the blade motor 76 of the blade 26, the battery 32, and one or more sensors. During use, the controller 30 is configured to receive a stream of information (e.g., from the sensors, motors, and/or batteries), interpret the data via one or more algorithms stored in memory 84, and output signals to the driven wheels 22c, 22d (e.g., via the motors 68a, 68b) and the blade 26 (e.g., via the blade motor 76) in response thereto. For the purposes of this application, it is to be understood that the sensors may include physical sensors mounted to or within the tool 10, integral sensors formed into the subcomponents of the tool 10 (e.g., within the motors 68a, 68b, 76 or battery 32), virtual sensors modeling real-life interactions, or some combination thereof.

The controller 30 is configured to detect the presence of a barrier 16 either directly and/or indirectly and trigger a pivot turn in response thereto. More specifically, the controller 30 is configured to determine whether a barrier 16 is within a pre-determined trigger distance of the tool 10, and then trigger a low-impact pivot turn based at least in part on the presence of the barrier 16. For example, to directly detect the presence of a barrier 16, the tool 10 may include one or more barrier detectors 78 configured to output a signal to the controller 30 when a barrier 16 comes within a pre-determined trigger distance of the body 18 of the tool 10. In such embodiments, the detectors 78 may also be configured to determine the angle of the barrier 16 relative to the direction of travel and/or the current distance to the barrier 16. To indirectly detect the presence of a barrier 16, the controller 30 may rely upon GPS tracking for both the tool 10 and/or the barriers 16 associated with the current cutting area 14. In such an embodiment, the controller 30 is configured to calculate the current location of the mower 30 based on signals output from a GPS detector (not shown) and, using algorithms saved in memory 84, calculate how close and at what angle a barrier 16 may be located relative to the direction of travel.

In some embodiments, the pre-determined trigger distance at which the controller 30 triggers a pivot turn may vary depending on the location of the barrier 16 relative to the body 18 and the angle of the barrier 16 relative to the direction of travel. More specifically, the trigger distance may be calculated to allow for sufficient space to conduct the pivot turn itself without having the tool 10 come into contact with the barrier 16. For example, in the illustrated embodiment a larger trigger distance may be used for barriers 16 positioned proximate the first end 34 of the tool 10 while a smaller trigger distance may be used for barriers 16 positioned proximate the second end 38 to accommodate the asymmetrically located pivot point PP (see FIG. 3).

The controller 30 is also configured to direct the tool 10 to travel in a first or forward direction F1 and a second or rearward direction F2. More specifically, to travel in the first direction F1, the controller 30 is configured to output signals to the wheel motors 68a, 68b instructing both wheels 22c, 22d to rotate in the forward direction at the same rotation speed. This causes the tool 10 to travel in the first direction F1 (e.g., toward the first end 34) at a predetermined rate of speed. In contrast, to travel in the second direction F2, the controller 30 is configured to output signals to the wheel motors 68a, 68b instructing both wheels 22c, 22d to rotate in the rearward direction at the same rotational direction of speed. This causes the tool 10 to travel in the second direction F2 (e.g., toward the second end 38) at a predetermined rate of speed.

The controller 30 is also configured to direct the tool 10 to undergo a low-impact pivot turn having a specific turn angle TA. The pivot turn is low-impact in the sense that it aims to minimize the amount of battery usage necessary to complete the turn by minimizing the total amount of angular motion that must occur. Furthermore, the relatively small amount of angular motion required for the turn also minimizes any damage or wear done to the underlying turf during the maneuver.

To complete the turn, the controller 30 outputs signals to the wheel motors 68a, 68b instructing the two wheels 22c, 22d to rotate such that the tool 10 begins to rotate about a pivot point PP. The controller 30 can then monitor the progress of the rotation either directly (e.g., via sensors monitoring the motion of the motors 68 and/or wheels 22) or indirectly (e.g., via GPS and the like). Once the desired turn angle TA is achieved, the controller 30 outputs signals to the wheel motors 68a, 68b instructing them to stop.

In the illustrated embodiment, the pivoting action is the result of the controller 30 instructing the two wheels 22c, 22d to rotate in opposite directions. As such, the pivot point PP is generally positioned between the two driven wheels 22c, 33d along the rear axis 64 (see FIG. 3). However, in alternative embodiments different wheel layouts and drive systems may result in the pivot point PP being positioned elsewhere along the body 18. In some embodiments, the controller 30 may manipulate the operation of the wheels 22 such that the pivot point PP' is positioned coincident with the blade axis 72 (see FIG. 6). In such embodiments, damage to the underlying turf is further minimized because the blade 26 does not actually move relative to the support surface 60 during the pivot turn. Such turning action may be the result of using tracks, having all four wheels being steerable, using omni-wheels, and the like.

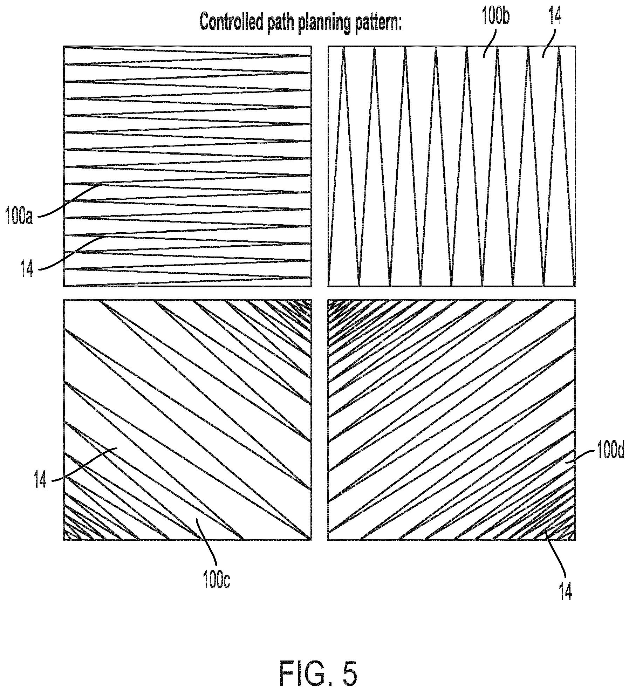

As shown in FIGS. 5A-5D, the controller 30 is also configured to instruct the tool 10 to undergo a low-impact pivot turn upon reaching a barrier 16 traveling in the first direction F1 (e.g., toward the first end 34) traveling a predetermined rate of speed. More specifically, when the body 18 of the tool 10 comes within a pre-determined trigger distance 90 of the barrier 16, the controller 30 detects the presence of the barrier 16 (described above) and triggers a pivot turn to take place.

With the turn triggered, the controller 30 then outputs signals to the wheel motors 68a, 68b causing the tool 10 to come to a stop and rotate about a pivot point PP a pre-determined turn angle TA (described above). In the illustrated embodiment, the controller 30 instructs the tool 10 to rotate so that the turn angle TA is less than 90 degrees. In other embodiments, the turn angle TA is less than or equal to 80 degrees, 75 degrees, 70 degrees, 60 degrees, 50 degrees, 45 degrees, 30 degrees, 20 degrees, and 10 degrees. In still other embodiments, the turn angle TA is between 5 to 10 degrees. In still other embodiments, the turn angle TA is between 5 and 30 degrees. In still other embodiments, the turn angle TA is between 5 and 45 degrees. In still other embodiments, the controller 30 may select a turn angle TA at random from within an "angle range." In such embodiments, the angle range only includes angles less than 90 degrees. In still other embodiments, the angle range only includes angles less than or equal to 80 degrees, 75 degrees, 70 degrees, 60 degrees, 50 degrees 45 degrees, 30 degrees, 20 degrees, and 10 degrees. In still other embodiments, the angle range only includes angles between 5 to 10 degrees. In still other embodiments, the angle range is between 5 and 30 degrees. In still other embodiments, the angle range is between 5 and 45 degrees, In still other embodiments, the turn angle TA may be constant so that every other line the tool 10 travels is parallel (see patterns 100a, 100b, 100c, 100d of FIG. 5). In still other embodiments, the controller 30 may alternate between a pre-determined pattern of selected turn angles TA that all fall within the angle range. In still other embodiments, the controller 30 may be configured to calculate a turn angle TA from within the pre-determined angle range based on one or more travel attributes such as, but not limited to, the grade of the support surface 60, the angle at which the tool 10 is approaching the barrier 16, the speed at which the tool 10 is approaching the barrier 16, the turning angle TA of recent turns, and the like.

After the pivot has taken place, the controller 30 outputs signals to the wheel motors 68a, 68b causing the tool 10 to begin traveling in the second direction of travel F2, opposite the first direction of travel F1, at a predetermined speed. The tool 10 then continues to cut the vegetation as it travels in the reverse direction F2 away from the barrier 16.

The tool 10 may then continue traveling in the second direction of travel F2 until the tool 10 again encounters a barrier 16 at which time, once the barrier 16 falls within the predetermined trigger distance 90, the controller 30 will trigger another low-impact turn.

With the turn triggered, the controller 30 first outputs signals to the wheel motors 68a, 68b causing the tool 10 to come to a stop and rotate about a pivot point PP a pre-determined turn angle TA (described above). After the pivot has taken place, the controller 30 then outputs signals to the wheel motors 68a, 68b causing the tool 10 to begin traveling in the first direction F1 at a predetermined speed. The tool 10 then continues to cut the vegetation as it travels in the forward direction F1 away from the barrier 16.

The above described actions may then be repeated as necessary until an entire cutting pattern (described below) is complete.

FIG. 5 illustrates a series of cutting patterns 100a, 100b, 100c, 100d, each utilizing low-impact turns to cover the desired cutting area 14 enclosed by a barrier 16. As shown, when multiple low-impact turns (described above) are combined together, it allows the tool 10 to tightly cover a given cutting area 14.

In the illustrated embodiment, each illustrated embodiment includes a common turn angle TA such that the tool 10 produces the same turning angle TA each time it interacts with the barrier 16. However, in alternative embodiments the turning angle TA may be randomly selected from an angle range (described above) to impart some level of randomness to the cutting pattern overall. By keeping the random turning angles TA within the above-described ranges, the tool 10 is able to provide the advantages of randomized cutting patterns while still maintaining the low-impact style of turn. In still other embodiments, the cutting pattern itself may dictate that the cutting angle TA be adjusted depending on the relative angle between the direction of travel and the barrier 16.

Furthermore, in some embodiments a single cutting session may include the tool 10 going over the same cutting area 14 multiple times using a different cutting pattern 100a, 100b, 100c, 100d for each pass. For example, in the illustrated embodiment, a single cutting session may include the tool 10 conducting all four cutting patterns 100a, 100b, 100c, 100d

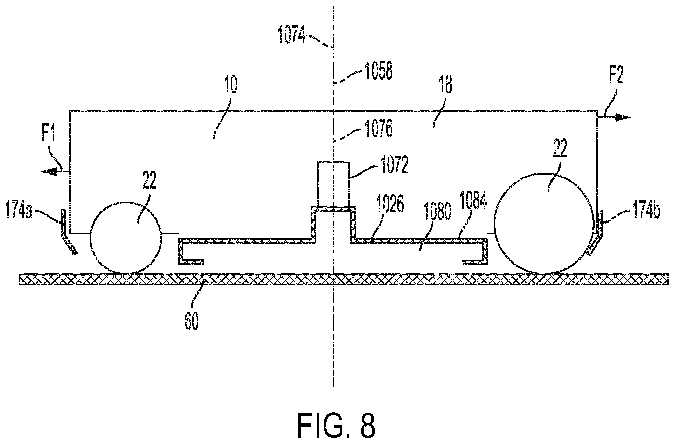

FIG. 8 illustrates another embodiment of a cutting assembly 1026. More specifically, the cutting assembly 1026 includes a blade guard 1084 defining a guard axis 1076, a cutting motor 1072 mounted to the blade guard 1084, and a cutting blade 1080 in operable communication with the cutting motor 1072 and configured to rotate with respect to the blade guard 1084 about a blade axis 1074. As shown in FIG. 8, the illustrated blade axis 1074 is coincident with the guard axis 1076. However, in alternative embodiments, the blade axis 1074 may be set at an angle to the guard axis 1076 and/or offset from the guard axis 1076.

In the illustrated embodiment, cutting assembly 1026 is a "floating" assembly such that its position can be adjusted relative to the body 18 during operation. More specifically, the blade guard 1080 acts as a mounting point for the motor 1072 and/or blade 1080 so that all three elements move together as a unit during use relative to the body 18 while maintaining their relative alignment. In the illustrated embodiment, the cutting assembly 1026 may be adjusted vertically (e.g., axially along the central axis 1058) relative to the body 18 to allow the cutting height (e.g., the distance between the blade 1080 and the support surface 1060) to be adjusted. In still other embodiments, the cutting assembly 1026 may also pivot or rotate relative to the body 18 to allow the cutting assembly 1026 to accommodate variations in the contour of the support surface 60 and the like.

As shown in FIG. 8, the motor 1072 of the cutting assembly 1026 is mounted to the blade guard 1084 and configured to drive the blade 1080 relative thereto. During use, the motor 1072 is configured to receive signals from the controller 30 indicating the speed and direction of rotation of the blade 1080 relative to the guard 1084.

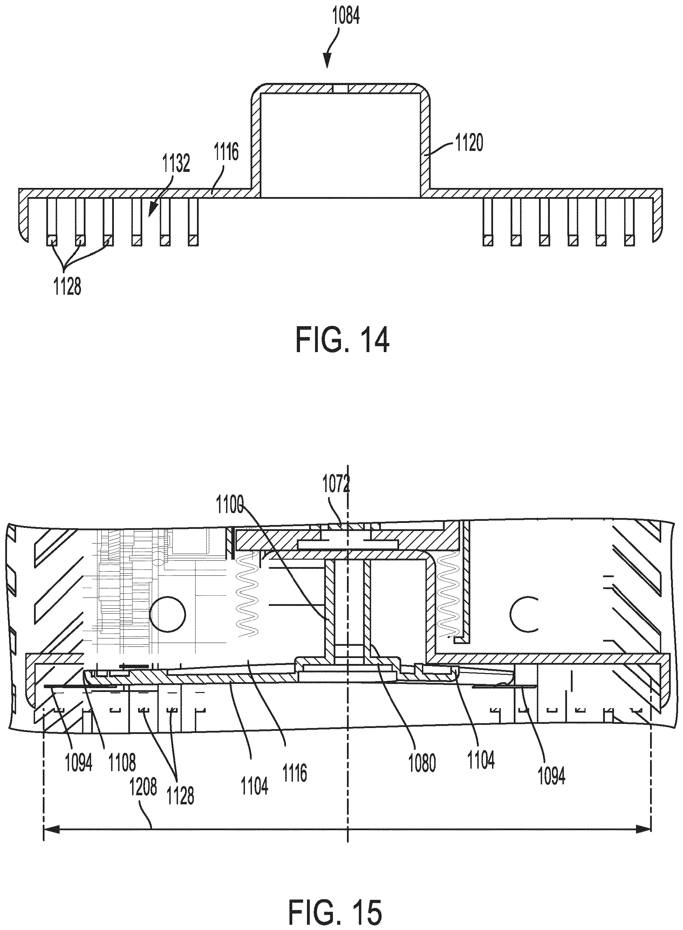

As shown in FIG. 15, the cutting blade 1080 of the cutting assembly 1026 includes one or more blade elements 1094 and is configured to rotate about the blade axis 1074 during use. In the illustrated embodiment, the blade 1080 includes a spindle 1100 configured to be coupled to the motor 1072, and one or more arms 1104 extending radially outwardly from the spindle 1100 opposite the motor 1072 to form a corresponding distal end 1108 to which the blade elements 1094 are removably attached thereto. While the illustrated cutting assembly 1026 includes three arms 1104 each extending radially outwardly from the spindle 1100 at equal intervals from each other (e.g., every 121.66 degrees), in other embodiment, more or fewer arms 1104 and/or blade elements 1094 may be present. Furthermore, while the illustrated cutting blade 1080 is shown being attached directly to the motor 1072, it is understood that in alternative embodiments the motor 1072 may drive the blade 1080 indirectly via a series of gears. In such embodiments, the cutting blade 1080 and motor 1072 may rotate about different axes.

In still other embodiments, the arms 1104 of the cutting blade 1080 may be replaced by other structures configured to position the blade elements 1094 at the desired radial distance from the guard axis 1076. For example, the cutting blade 1080 may include a disk with blade elements 1094 coupled to the periphery thereof, radial and circumferential struts forming a structure to which the blade elements 1094 may be coupled, and the like. In still other embodiments, the blade elements 1094 may be formed integrally with the body of the cutting blade 1080 to form a single unit.

In the illustrated embodiment, the cutting blade 1080 defines a blade diameter 1208 generally defined as twice the distance between the blade axis 1074 and the most radially distant point of the longest arm 1104. In the illustrated embodiment, the cutting blade 1080 may include a blade diameter 1208 that is no less than 90% the body width 1204 at that same location (e.g., the distance between the first end 1042 and the second end 1046 measured parallel to the lateral axis 1054). In other embodiments, the blade diameter 1208 is no less than 85%, 80%, 75%, and 70% of the body width 1204 at that same location. In still other embodiments, the distal end 1108 of the longest arm 1104 will be positioned no further than 10cm from the corresponding side 42, 46 when it is at its closest proximity thereto. In other embodiments, the distal end 1108 of the longest arm 1104 will be positioned no less than 8cm, 6cm, and 5cm from the corresponding side 42, 46 when the distal end 1108 is at its closest proximity thereto.

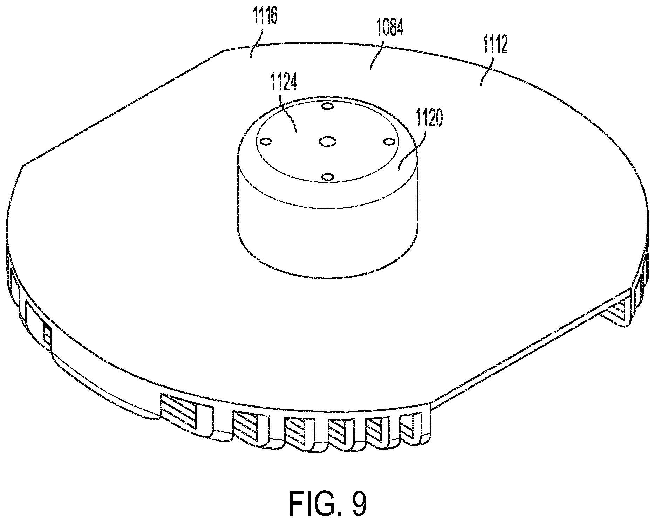

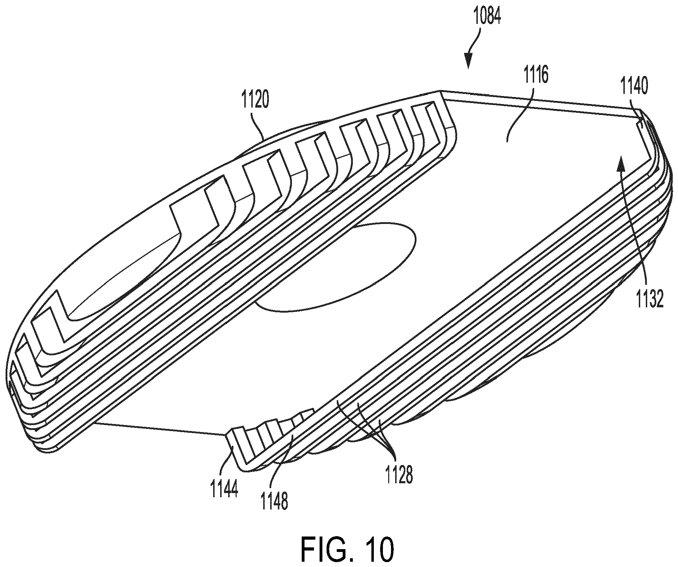

As shown in FIGS. 9-14, the blade guard 1084 is configured to at least partially encompass and protect the cutting blade 1080 while allowing grass and vegetation access thereto while the tool 10 travels in the forward F1 and rearward F2 directions. More specifically, the blade guard 1084 serves multiple roles during use including allowing the blade 1080 to freely rotate about the guard axis 1076, allowing grass and other vegetation to come into contact with the blade 1080 regardless of whether the tool 10 is traveling in the forward F1 or rearward F2 direction, protecting the cutting blade 1080 from the ground and large debris, and protecting the end user from coming into contact with the blade 1080 while the blade 1080 is rotating.

The blade guard 1084 includes a body 1112 having a base plate 1116 defining the guard axis 1076, a hub 1120 extending axially from one side of the base plate 1116 to form a first or closed end 1124, and a plurality of ribs 1128 extending from the base plate 1116 opposite the hub 1120. Together, the ribs 1128, base plate 1116, and hub 1120 at least partially enclose a blade volume 1132 configured to at least encompass the cutting blade 1080 therein. The blade guard 1084 also defines a longitudinal axis 1126 and a lateral axis 1130, each passing through the guard axis 1076. When the blade guard 1084 is installed on the body 18, the longitudinal axis 1126 generally aligns with the longitudinal axis 50 of the body 18 while the lateral axis 1130 generally corresponds to the lateral axis 54 of the body 18.

As shown in FIG. 14, the base plate 1116 of the blade guard 1084 is a flat plate having a leading edge 1134, a trailing edge 1138 opposite the leading edge 1134, a left or first side 1142 extending between the leading edge 1134 and the trailing edge 1138, and a right or second side 1146 extending between the leading edge 1134 and the trailing edge 1138 and opposite the first arcuate side 1142. When the guard 1084 is installed on the body 18, the leading edge 1134 is positioned proximate the first end 34 of the body 18, the trailing edge 1138 is positioned proximate the second end 38 of the body 18, the first side 1142 is positioned proximate the first edge 42, and the second side 1146 is positioned proximate the second edge 46. In the illustrated embodiment, the leading and trailing edges 1134, 1138 are generally linear in contour while the first and second sides 1142, 1146 are arcuate. However, in alternative embodiments the base plate 1116 may form different shapes whereby the edges 1134, 1138, 1142, 146 have different contours. For example, in alternative embodiments the base plate 1116 may include a rectangular shape, a circular shape, and/or other polygonal shapes. In still other embodiments, the base plate 116 may form some combination thereof.

The hub 1120 of the blade guard 1084 is substantially cylindrical in shape extending axially from the base plate 1116 from one side thereof to form an enclosed end 1144. During use, the enclosed end 1144 of the hub 1120 is mounted to the body 18 of the tool 10 (e.g., via a height adjuster or other adjustment mechanism).

The blade guard 1084 also includes a plurality of ribs 1128 extending from the base plate 1116 and configured to at least partially define the blade volume 1132 therebetween. Each rib 1128 is substantially "C" shaped having a first end 1140 extending axially away from the base plate 1116, a second end 1144 opposite the first end 1140 also extending axially away from the base plate 1116, and an intermediate portion 1148 extending therebetween and spaced a distance from the base plate 1116 (see FIG. 5). In the illustrated embodiment, each rib 1128 is substantially parallel to both adjacent ribs 1128 to form a plurality of gaps 1152 therebetween. As shown in Fig. 14, each rib 1128 is oriented parallel to the longitudinal axis 1126 of the blade guard 1084. When installed, each rib 1128 is also parallel to the longitudinal axis 50 of the body 18 and is parallel to both the forward F 1 and rearward F2 directions of travel.

Together, the ribs 1128 and the base plate 1116 encompass the cutting blade 1080 both radially and axially. More specifically, the blade guard 1084 is positioned so that a datum axis oriented perpendicular to the guard axis 1076 will have the guard 1084 positioned immediately outside both sides of the blade 1080 (e.g., radially encompassed; rib, blade, rib). Furthermore, a datum axis oriented parallel to the guard axis 1076 will have the guard 1084 positioned immediately above and below the blade 1080 (e.g., axially encompassed; plate, blade, rib). Stated differently, the blade guard 1084 is shaped so that at least a portion of the blade guard 1084 axially overlaps the cutting blade 1080. Furthermore, the blade guard 1084 is shaped so that at least a portion of the blade guard 1084 is positioned below the cutting blade 1080 (e.g., positioned between the cutting blade 1080 and the support surface 1060).

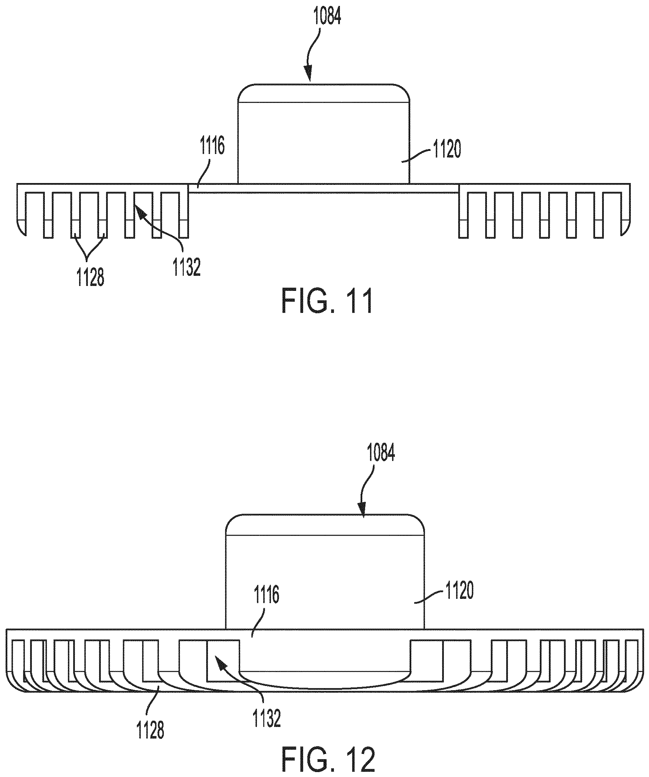

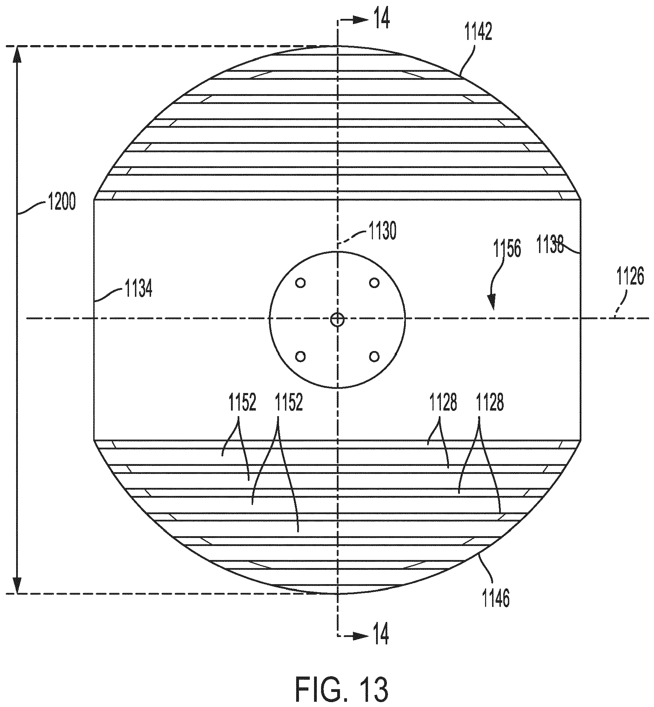

As shown in FIGS. 11 and 13, each gap 1152 of the blade guard 1084 is oriented parallel to the longitudinal axis 1126 of the blade guard 1084 and extends the entire longitudinal length of the blade guard 1084, being open on both ends. When the guard 1084 is installed on the body 18, each gap 1152 is parallel to the longitudinal axis 50 of the body 18 and is parallel to both the forward F1 and rearward F2 directions of travel. By doing so, the gaps 1152 allow vegetation or grass to enter each gap 1152, travel along the longitudinal length of each gap 1152, and exit each gap 1152 with the tops of the vegetation passing through the gaps 1152 and extending into the blade volume 1132 regardless of whether the tool 10 is traveling in the forward F1 or rearward F2 direction. As the gaps 1152 are unimpeded along their entire longitudinal length, the vegetation remains upright as it is engaged and cut by the blade 1080 making for a more even cut.

In the illustrated embodiment, the ribs 1128 are formed into two groups, each positioned proximate the sides of the blade guard 1084 with a large open region 1156 therebetween. More specifically, the open region 1156 generally corresponds laterally to the width of the flat portions of the base plate 1116 while the ribs 1128 are positioned in the regions laterally outside the flats. Together, the ribs 1128 are positioned so that the guard 1084 forms a central "open" portion (e.g., where no ribs 1128 are positioned below the blade 1080), and two "enclosed" portions on either side perpendicular to the direction of travel F1, F2 (e.g., where the ribs 1128 are positioned below the blade 1080). As shown in Fig. 13, the blade guard 1084 is symmetric about the lateral axis 1130.

The blade guard 1084 is laterally centered with respect to the body 18 of the tool 10 (e.g., the guard axis 1076 is lies on the longitudinal axis 50). However, in alternative embodiments the blade guard 1084 may be offset to one side or the other. Furthermore, in the illustrated embodiment, the guard width 1200 (e.g., the greatest width of the blade guard 1084 measured parallel to the lateral axis 1054, see FIG. 13) is equal to the body width 1204 at the same location. However, in alternative embodiments, the guard width 1200 may be greater than or equal to 95%, be greater than or equal to 90%, be greater than or equal to 85%, be greater than or equal to 80%, or be greater than or equal to 75% of the body width 1204.

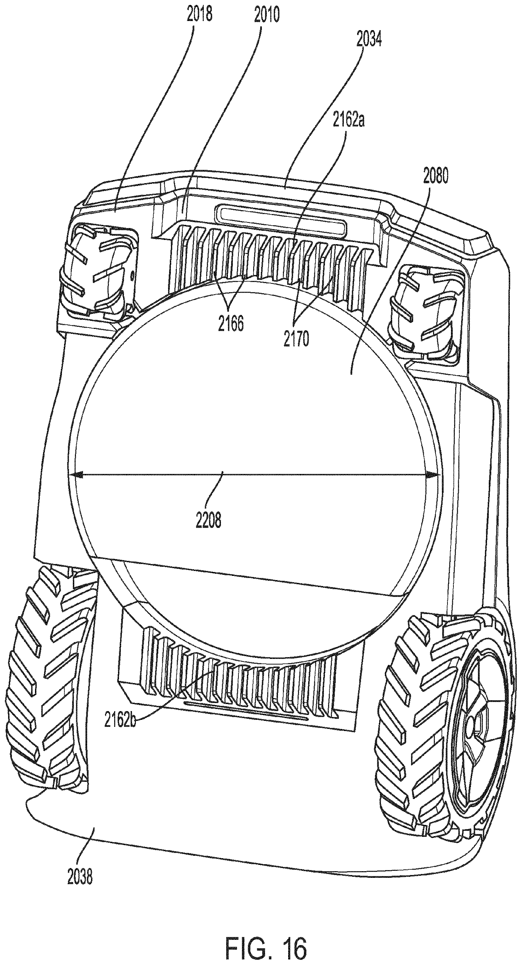

As shown in FIG. 16, another embodiment of the body 2018 of the tool 2010 also includes a forward body grass comb 2162a and rearward body grass comb 2162b. The forward grass comb 2162a is positioned between the cutting blade 2080 and the first end 2034 while the rearward grass comb 2162b is positioned between the cutting blade 2080 and the second end 2038. As such, the two grass combs 2162a, 2162b are positioned on opposite sides of the cutting blade 2080. More specifically, the two grass combs 2162a, 2162b are positioned so that a grass comb will be positioned upstream of the cutting blade 2080 regardless of whether the tool 2010 is traveling in the first direction F1 (e.g., when the forward grass comb 2162a is positioned upstream of the cutting blade 2080 during operation) or the second direction F2 (e.g., when the rearward grass comb 2162b is positioned upstream of the cutting blade 2080 during operation). While the illustrated embodiment includes two combs 2162a, 2162b, positioned proximate the first and second ends 2034, 2038; it is understood that in alternative embodiments more or fewer combs may be implemented to position a comb upstream of the cutting blade 2080 in additional directions of travel.

Both grass combs 2162a, 2162b include a plurality of teeth 2166 extending downwardly from the underside of the tool body 2018 to form a plurality of gaps 2170 therebetween. Each tooth 2166, in turn, is oriented so that the resulting gaps 2170 extend parallel with the longitudinal axis 2050 of the body 2018. Stated differently, the gaps 2170 are oriented so that they extend parallel to the direction of travel F1, F2 when the comb 2162a, 2162b is positioned upstream of the cutting blade 2080 (e.g., parallel to the forward direction F1 for the forward grass comb 2162a and parallel to the rearward direction F2 for the rearward grass comb 2162b).

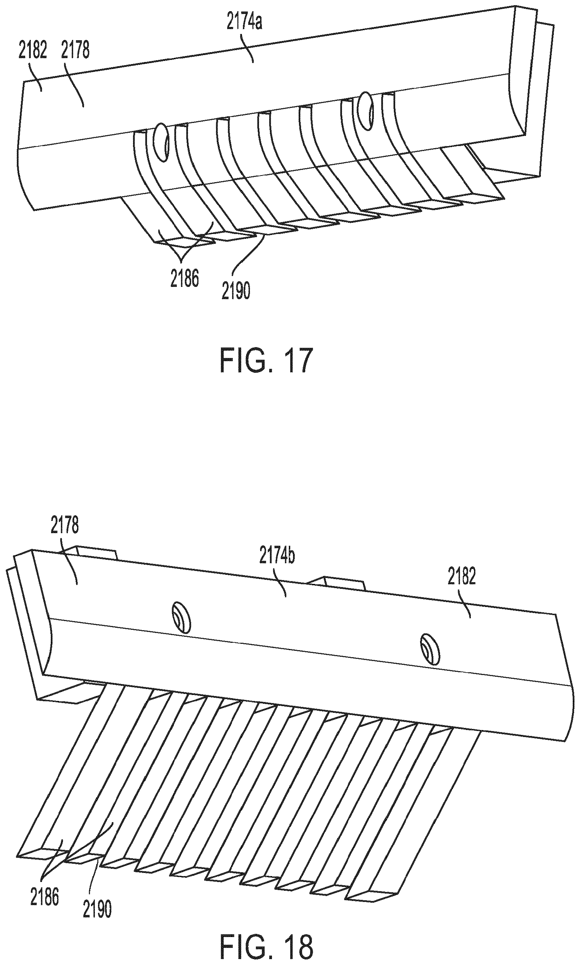

FIGS. 17 and 18 illustrate a pair of bumpers 2174a, 2174b movably coupled to the body 2018 and configured to output a signal to the controller 2030 upon interacting with an external feature (e.g., a user's hand, a user's foot, a rock, a wall, and the like). More specifically, the bumpers 2174a, 2174b are mounted to the body 2018 such that when a corresponding bumper 2174a 2174b comes into contact with an external feature, the bumper 2174a, 2174b is displaced relative to the body 2018 and subsequently outputs a signal to the controller 2030 indicating the same. In the illustrated embodiment, the tool 2010 includes a forward bumper 2174a positioned just forward of the first end 2034 of the body 2018, and a rearward bumper 2174b positioned just rearward of the second end 2038 of the body 2018. Although not shown, additional bumpers may also be present.

Each bumper 2174a, 2174b includes an elongated body having an outer surface 2178 facing away from the body 2018. More specifically, each bumper 2174a, 2174b also includes a substantially planar portion 2182 and a plurality of teeth 2186 extending downwardly from the planar portion 2182 toward the support surface 60 to produce a plurality of gaps 2190 therebetween. Together, the teeth 2186 and gaps 2190 form a bumper comb. During use, the teeth 2186 are sized to permit the grass or other vegetation to pass therethrough with minimal resistance while still remaining small enough to restrict access of a user's feet or fingers from gaining access to the cutting blade 2080.

As shown in FIGS. 17 and 18, each tooth 2186 of the forward bumper 2174a and the rearward bumper 2174b generally curves toward the body 2018 as it extends toward the support surface 60 to generate a tapered shape. This shape helps facilitate slope climbing without undesired contact between the support surface 60 and the bottom end of the bumper 2174a.

In the illustrated embodiment, the tool 2010 includes forward and rearward bumper combs 2174a, 2174b, and forward and rearward body grass combs 2162a, 2162b so that one of each (e.g., one bumper comb and one body comb) is positioned upstream of the cutting blade 2080 whether the tool 2010 is traveling in the forward direction F1 or the rearward direction F2. As such, the tool 2010 is able to operate at maximum efficiency in both directions.

While not shown, it is understood that in alternative embodiments the tool 2010 may only include the bumper combs 2174a, 2174b, and/or the body combs 2162a, 2162b in a particular embodiment. In such embodiments, the bumper combs 2174a, 2174b or body combs 2162a, 2162b are typically included in pairs (e.g., one ahead of the cutting blade 2080 and one behind the cutting blade 2080) to allow for operation in both the first and second direction F1, F2.

While not shown, various aspects or subcomponents of the tool 2010 may support one or more axes of symmetry to better accommodate vegetation cutting while traveling in both the first and second directions F1, F2. For example, the wheels 2022 may be oriented on the tool 10 so that they have at least longitudinal symmetry (e.g., the axis of symmetry is parallel to the lateral axis 54 or front to back symmetry). Furthermore, any sensors mounted to the body 2018 to produce at least longitudinal symmetry. In still other embodiments, the bumpers 2174, the grass combs 2162, the cutting assembly 2026, and the like may also include at least longitudinal symmetry to better accommodate vegetation cutting while traveling in both the first and second directions F1, F2. In still other embodiments, additional axes of symmetry may be present in the above described sub-components to allow vegetation cutting in still more directions of travel (e.g., side-to-side travel, pivoting about a given axis of rotation, and the like).

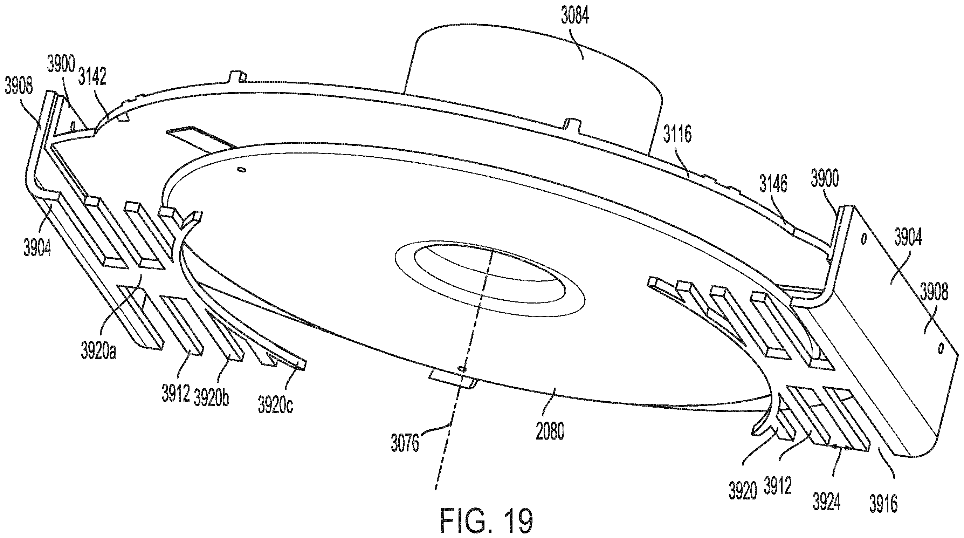

FIG. 19 illustrates another embodiment of the blade guard 3084. The blade guard 3084 is substantially similar to the blade guard 1084 described above so only the differences will be described in detail herein. The base plate 3116 of the blade guard 3084 is substantially disk shaped having an outer periphery that is similar to but slightly greater than the blade diameter 2208 of the corresponding cutting blade 2080. In instances where multiple blades 2080 are to be used interchangeably with a single blade guard 3084, the periphery of the base plate 3116 is similar but slightly greater than the blade diameter 2208 of the largest intended blade 280.

The blade plate 3116 also includes a pair of mounting points 3900 extending radially outwardly and axially upwardly (e.g., away from the support surface 60) from the first and second sides 3142, 3146 thereof. Each mounting point 3900, in turn, provides a mounting location to which a corresponding side guard 3904 may be coupled thereto.

Each side guard 3904 is coupled to a corresponding mounting point 3900 of the blade plate 3116 and configured to restrict horizontal and underneath access to the cutting blade 2080 during use. More specifically, each side guard 3904 is positioned so that it restricts access to the cutting blade 2080 at the locations where the blade 2080 is positioned closest to the periphery of the tool body 18. In the illustrated embodiment, the blade 2080 is closest to the periphery at the two sides 42, 46 so the guards 3904 are positioned accordingly. However, in alternative embodiments more or fewer guards 3904 may be attached to the blade plate 3116 as needed to restrict horizontal and underneath access to the cutting blade 2080 along any access vectors available to the user's feet, hands, and the like.

Each side guard 3904 includes a first portion 3908 extending axially downwardly from the blade plate 3116' relative to the guard axis 3076 and a second portion 3912 extending radially inwardly from the first portion 3908 opposite the blade plate 3116. In the illustrated embodiment, the first portion 3908 of each side guard 3904 is solid, having no apertures or access points formed therein while the second portion 3912 forms a grate of alternating slots 3916 and beams 3920.

As shown in FIG. 19, the slots 3916 and beams 3920 of the second portion 3912 of the side guard 3904 are oriented so that they are parallel to the longitudinal axis 50 when the guard 3084 is mounted to the tool body 18. This orientation serves two purposes, the first to not allow any fingers or toes access to the blade 2080, and also to assure that grass and other vegetation is able to access the blade 2080 when the tool 10 is traveling in both the first F1 and second F2 directions. In the illustrated embodiment, the second portion 3912 includes a central beam 3920a extending radially inwardly from the first portion 3908, and a plurality of lateral beams 3920b extending perpendicular to the central beam 3920a at pre-determined intervals to define a corresponding slot 3916 having a slot width 3924 therebetween. Each side guard 3904 also includes an arcuate beam 3920c positioned at the radially inward-most position of the central beam 3920a and curved to be such that the resulting curve is co-axial with the guard axis 3076.

In the illustrated embodiment, each slot width 3924 is no greater than 12mm, 10mm, 8mm, 6mm, and 4mm. In other embodiments, each slot 3916 is sized so that it will not permit a 12mm diameter cylinder to pass therethrough.

While the illustrated side guards 3904 are shown being formed separately and fastened to the blade plate 3116 using one or more fasteners, it is understood that in alternative embodiments the side guards 3904 may be formed integrally with the blade plate 3116. In still other embodiments, the side guards 3904 may be fastened to the blade plate 3116 so that the axial height between the second portion 3912 and the blade plate 3116 may be adjustable.

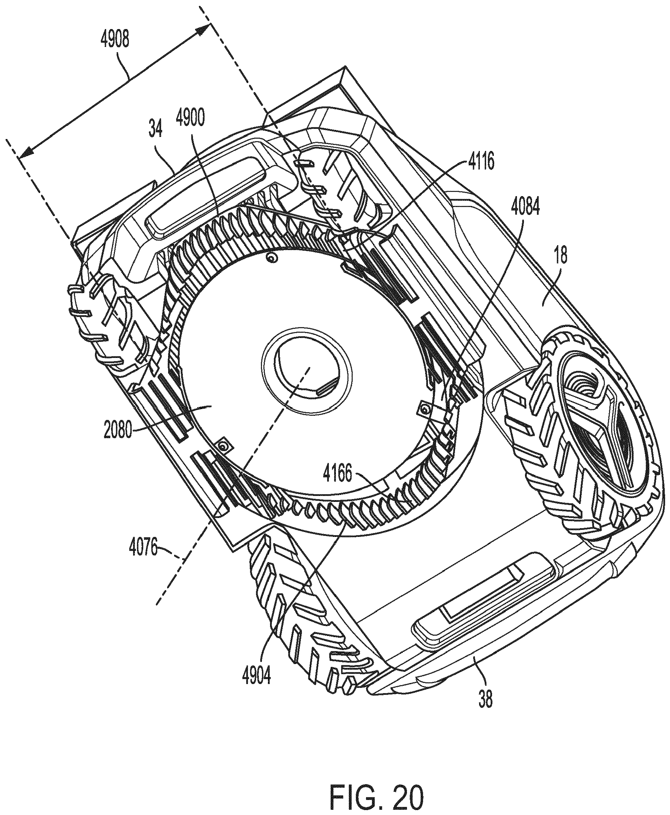

FIG. 20 illustrates another embodiment of blade guard 4084. The blade guard 4084 is substantially similar to the blade guard 3084 described above so only the differences will be discussed in detail here. The blade plate 4116 of the blade guard 4084 includes a first or grass comb 4900 integrally formed with the blade plate 4116 and positioned between the guard axis 4076 and the front end 34 of the tool body 18, and a second or rear grass comb 4904 integrally formed with the blade plate 4116 and positioned between the guard axis 4076 and the rear end 38 of the tool body 18. By being integrally formed with the blade plate 4116, both the first and second grass combs 4900, 4904 float together with the rest of the cutting assembly 26. This allows the grass combs 4900, 4904 are able to travel along and conform to the contour of the support surface 60.

As shown in FIG. 20, both the first and second combs 4900, 4904 define a comb width 4908 measured parallel to the lateral axis 54. In the illustrated embodiment, both combs 4900, 4904 have a comb width 4908 that is greater than the blade diameter 2208 of the blade 2080. The combs 4900, 4904 are also both shaped so that the depth of the individual teeth 4166 within each comb 4900, 4904 decreases the further a corresponding tooth 4166 is positioned from the lateral center of the tool 10 (e.g., the further from the longitudinal axis 50). While both combs 4900, 4904 have substantially the same comb width 4908 and comb contour, it is understood that in alternative embodiments each comb 4900, 4904 may have a unique width 4908 and contour.

The blade guard 4084 is shaped so that it has at least one axis of symmetry therethrough. More specifically, the illustrated blade guard has two axes of symmetry - a first axis of symmetry in the longitudinal direction (e.g., with the axis of symmetry parallel to the lateral axis 54 or front/back symmetric), and a second axis of symmetry in the lateral direction (e.g., with the axis of symmetry parallel to the longitudinal axis 50 or side to side symmetric). The symmetric nature of the blade guard 4084 better facilitates the ability of the tool 10 to operate (e.g., cut vegetation) while traveling in both the first direction F1 and the second direction F2. In instances where more traveling directions are to be accommodated, more axis of symmetry may be present in the blade guard 4084.

## Claims

1. A robotic garden tool comprising:
a tool body having a first end and a second end opposite the first end, wherein the tool body defines a longitudinal axis extending through the first end and the second end;
one or more wheel assemblies coupled to the tool body; and
a controller in operable communication with the wheel assemblies, the controller configured to output one or more signals to the wheel assemblies to:
move the tool body in a first direction of travel,
stop movement of the tool body in a first location spaced a predetermined distance from an object,
rotate the tool body while in the first location, and
move the tool body away from the first location in a second direction of travel opposite the first direction of travel after the tool body has rotated.

2. The robotic garden tool of claim 1, wherein the control system is configured to output one or more signals to cause the tool body to rotate less than 90 degrees in the first location.

3. The robotic garden tool of claim 1, wherein the control system is configured to output one or more signals to cause the tool body to rotate less than 30 degrees in the first location.

4. The robotic garden tool of claim 1, wherein the control system configured to output one or more signals to cause the tool body to rotate less than 10 degrees in the first location.

5. The robotic garden tool of claim 1, wherein the tool body includes a periphery, and wherein the tool body is configured to rotate about a tool pivot axis that is positioned within the periphery.

6. The robotic garden tool of claim 1, wherein the tool body travels with the first end as the leading end when traveling in the first direction, and wherein the tool body travels with the second end as the leading end when traveling in the second direction.

7. The robotic garden tool of claim 1, wherein the control system is configured to send one or more signals to cause the tool body to pivot a randomly selected number of degrees when in the first location.

8. The robotic garden tool of claim 7, wherein the randomly selected number of degrees is less than 30 degrees.

9. The robotic garden tool of claim 1, further comprising a cutting assembly, and wherein the cutting assembly includes a blade guard defining a guard axis, and a cutting blade that is rotatable with respect to the blade guard about the guard axis.

10. The robotic garden tool of claim 9, wherein the blade guard includes at least one axis of symmetry.

11. The robotic garden tool of claim 9, wherein the axis of symmetry is perpendicular to the longitudinal axis of the tool body.

12. The robotic garden tool of claim 9, wherein the cutting assembly is configured to cut vegetation while the tool body is traveling in both the first direction of travel and the second direction of travel.

13. A method of turning a robotic garden tool in the presence of an object, where the robotic garden tool includes a body with a first end and a second end opposite the first end, the method comprising:
moving the robotic garden tool in a first direction of travel with the first end serving as the leading end;
stopping the robotic garden tool at a first location spaced a predetermined distance from the object;
rotating the robotic garden tool when in the first location; and
moving the robotic garden tool away from the first location in a second direction of travel with the second end serving as the leading end.

14. The method of claim 13, wherein the robotic garden tool includes a periphery, and wherein rotating the robotic garden tool includes rotating the robotic garden tool about a pivot point located within the periphery.

15. The method of claim 13, wherein rotating the robotic garden tool includes rotating the robotic garden tool less than 90 degrees.

16. The method of claim 13, wherein rotating the robotic garden tool includes rotating the robotic garden tool less than 30 degrees.

17. The method of claim 13, wherein rotating the robotic garden tool includes rotating the robotic garden tool less than 10 degrees.

18. The method of claim 13, further comprising selecting a random rotation angle, and wherein rotating the robotic garden tool includes rotating the robotic garden tool by the random rotation angle.

19. The method of claim 18, wherein selecting a random rotation angle includes selecting an angle that is less than or equal to 30 degrees.

20. The method of claim 13, wherein the garden tool includes at least one wheel assembly, and wherein moving the robotic garden tool in the first direction includes rotating the first wheel assembly in a first rotational direction, and wherein moving the robotic garden tool in a second direction includes rotating the first wheel assembly in a second direction of rotation opposite the first direction of rotation.
